# EUROPEAN PATENT SPECIFICATION

(11) **EP 2 632 221 B1**
(45) Date of publication and mention of the grant of the patent: **27.04.2016**
(21) Application number: 13020023.1
(22) Date of filing: 09.03.2011
(51) Int. Cl.: H04L 1/00, H04L 1/18, H04W 84/04, H04L 1/08, H04L 5/00

(54) **Method and apparatus for sending control information with enhanced coverage in a wireless network**
Verfahren und Vorrichtung zum Senden von Steuerinformationen mit erhöhter Abdeckung in einem drehtlosen Netzwerk
Procédé et dispositif pour l'envoi de données de commande avec une couverture accrue dans un réseau sans fil

(30) Priority: 09.03.2010 US 201013043306; 08.03.2011 US 201161312187 P
(43) Date of publication of application: 28.08.2013
(62) Divisional of application: 11711712.7
(73) Proprietor: QUALCOMM Incorporated, San Diego, CA 92121-1714 (US)
(72) Inventor: Vajapeyam, Madhavan Srinivasan, San Diego, CA 92121-1714 (US); Luo, Tao, San Diego, CA 92121-1714 (US); Xu, Hao, San Diego, CA 92121-1714 (US)
(74) Representative: Carstens, Dirk Wilhelm

(56) References cited:
- WO-A1-2005/041606
- US-A1- 2005 113 087
- US-A1- 2007 054 691

## Description

### BACKGROUND

### I. Field

The present disclosure relates generally to communication, and more specifically to techniques for sending control information in a wireless communication network.

### II. Background

Wireless communication networks are widely deployed to provide various communication content such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

A wireless communication network may include a number of base stations that can support communication for a number of user equipments (UEs). A base station may transmit data and control information to a UE. The UE may be located far away from the base station and may observe poor channel conditions. It may be desirable to send control information in a manner such that it can be reliably received by the UE even in poor channel conditions.

Attention is draw to the document WO2005041606 (A1), it describes a method of reducing impact of interference on a first control channel in a digital wireless communication system comprising: a backup control channel, wherein the first control channel is being replicated into plurality of control channels and a wireless communication unit operating on the first control channel switches to one of the replicated control channels.

Attention is drawn to the document US2005113087 (A1) which describes techniques for performing early decoding of a message on a control channel in a wireless (e.g., GSM) communication system. In a GSM system, a message for a paging channel is transmitted in four bursts. For early decoding in GSM, a terminal initially receives the first two bursts for the message. The two bursts are processed and decoded to recover the message, which is then checked to determine whether it has been decoded correctly or in error. The decoding process can terminate and the terminal may go to sleep early if the recovered message is good. Otherwise, the third burst is received, and all three bursts are processed and decoded to recover the message. Again, the decoding process can terminate if the recovered message is good. Otherwise, the fourth burst is received, and all four bursts are processed and decoded to recover the message.

Further attention is drawn to document US2007054691 (A1), which describes techniques for improving reliability of control information. A transmitter determines if improved reliability is applicable for at least one control symbol to be sent in a timeslot. The transmitter sends the control symbol(s) without improved reliability if deemed not applicable and with improved reliability if deemed applicable. A receiver receives the control symbol(s) and identifies each received control symbol as a reliable control symbol or an unreliable control symbol based on the received signal quality of the received control symbol and a threshold. The receiver adjusts a control loop based on reliable control symbols. The receiver also combines unreliable control symbols to obtain combined symbols and selectively adjusts the control loop based on the combined symbols. The control loop may be for transmit power or timing.

### SUMMARY

In accordance with the present invention, a method, as set forth in claim 1 and 7, and an apparatus, as set forth in claims 6 and 10, are provided. Embodiments of the invention are claimed in the dependent claims.

Techniques for sending control information in a manner to improve reliability are described herein. In an aspect, control information may be sent on multiple control channels, which may be independently configured and operated, in order to improve reliability.

In one design, a base station may send signaling to instruct at least one UE to receive control information on both a first control channel and a second control channel. In one design, the first control channel may comprise a Physical Downlink Control Channel (PDCCH) sent in a control region of a subframe, and the second control channel may comprise a Relay PDCCH (R-PDCCH) sent in a data region of a subframe. The base station may send control information for the at least one UE on the first and second control channels, e.g., in different time and/or frequency regions of a subframe. In one design, for repetition coding, the base station may process the control information to obtain coded data and may send the coded data on the first control channel and also on the second control channel. In another design, for joint coding, the base station may process the control information to obtain coded data, partition the coded data into a first part and a second part, send the first part on the first control channel, and send the second part on the second control channel.

In another aspect, control information may be sent on a control channel in multiple subframes with bundling to improve reliability. In one design, for repetition coding, a base station may process control information to obtain coded data, send the coded data on the control channel in a first subframe, and send the same coded data in at least one additional subframe. In another design, for joint coding, the base station may process the control information to obtain coded data, partition the coded data into multiple parts, and send a different part of the coded data on the control channel in each subframe.

A UE may perform the complementary processing to recover control information sent by a base station in accordance with any of the designs described herein. Various aspects and features of the disclosure are described in further detail below.

### BRIEF DESCRIPTION OF THE DRAWINGS

FIG. 1 shows a wireless communication network.
FIG. 2 shows an exemplary subframe structure.
FIGS. 3A and 3B show transmission of control information on both the PDCCH and R-PDCCH with repetition coding and joint coding, respectively.
FIG. 4 shows an exemplary configuration of the PDCCH and R-PDCCH.
FIG. 5 shows transmission of control information on the R-PDCCH with bundling.
FIG. 6 shows a process for sending control information on multiple control channels.
FIG. 7 shows a process for receiving control information sent on multiple control channels.
FIG. 8 shows a process for sending control information with bundling.
FIG. 9 shows a process for receiving control information sent with bundling.
FIG. 10 shows an apparatus for sending control information.
FIG. 11 shows an apparatus for receiving control information.
FIG. 12 shows a block diagram of a base station and a UE.

### DETAILED DESCRIPTION

The techniques described herein may be used for various wireless communication networks such as CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A) are new releases of UMTS that use E-UTRA, which employs OFDMA on the downlink and SC-FDMA on the uplink. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE, and LTE terminology is used in much of the description below.

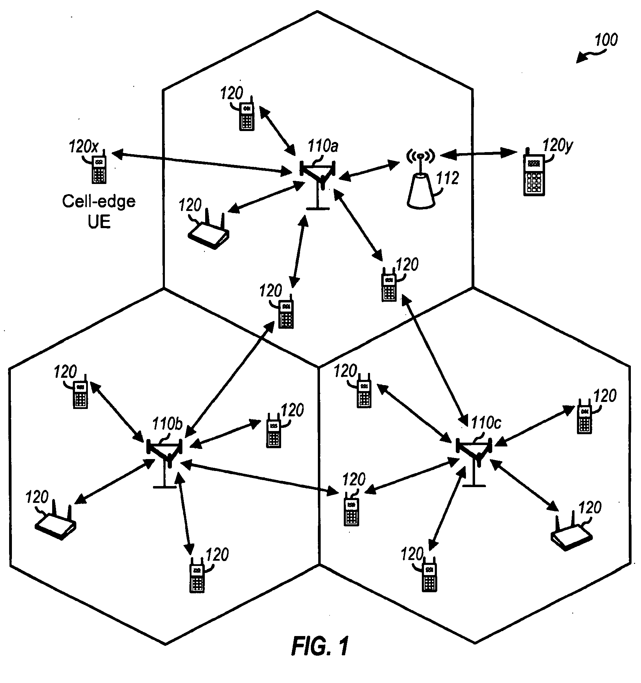

**FIG. 1** shows a wireless communication network 100, which may be a LTE network or some other wireless network. Wireless network 100 may include a number of evolved Node Bs (eNBs) 110 and other network entities. An eNB may be an entity that communicates with the UEs and may also be referred to as a base station, a Node B, an access point, etc. Each eNB 110 may provide communication coverage for a particular geographic area and may support communication for the UEs located within the coverage area. To improve network capacity, the overall coverage area of an eNB may be partitioned into multiple (e.g., three) smaller areas. Each smaller area may be served by a respective eNB subsystem. In 3GPP, the term "cell" can refer to the smallest coverage area of an eNB and/or an eNB subsystem serving this coverage area. In general, an eNB may support one or multiple (e.g., three) cells.

Wireless network 100 may also include relay stations. A relay station may be an entity that can receive a transmission of data from an upstream station (e.g., an eNB or a UE) and send a transmission of the data to a downstream station (e.g., a UE or an eNB). In the example shown in FIG. 1, a relay station 112 may communicate with an eNB 110a and a UE 120y in order to facilitate communication between eNB 110a and UE 120y.

UEs 120 may be dispersed throughout the wireless network, and each UE may be stationary or mobile. A UE may also be referred to as a mobile station, a terminal, an access terminal, a subscriber unit, a station, etc. A UE may be a cellular phone, a personal digital assistant (PDA), a wireless modem, a wireless communication device, a handheld device, a laptop computer, a cordless phone, a wireless local loop (WLL) station, a smart phone, a netbook, a smartbook, a tablet, etc. A UE may communicate with an eNB via the downlink and uplink. The downlink (or forward link) refers to the communication link from the eNB to the UE, and the uplink (or reverse link) refers to the communication link from the UE to the eNB.

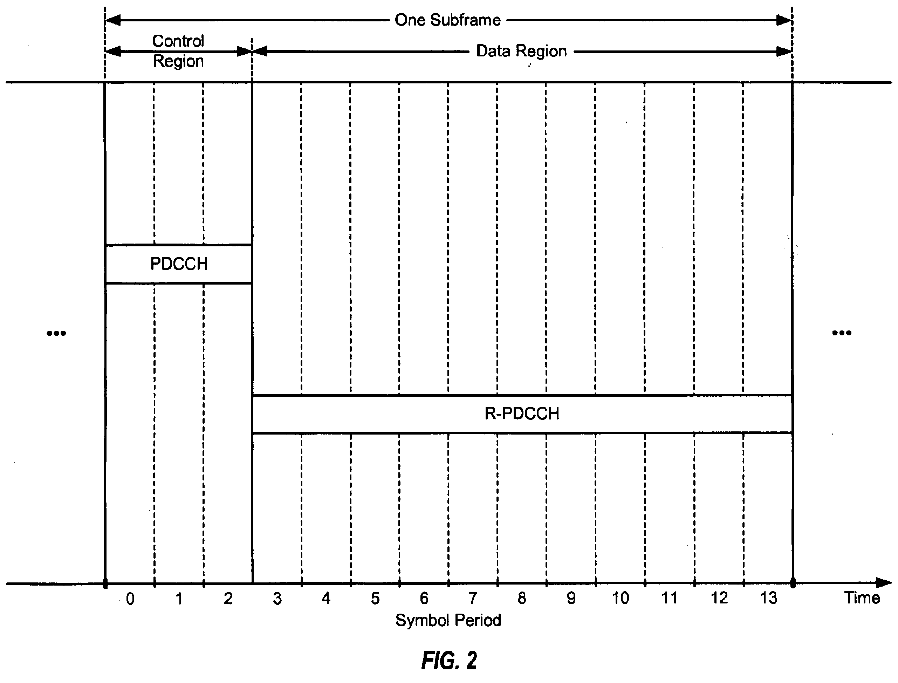

**FIG. 2** shows a subframe structure for the downlink in LTE. The transmission timeline for the downlink may be partitioned into units of radio frames. Each radio frame may have a predetermined duration (e.g., 10 milliseconds (ms)) and may be partitioned into 10 subframes. Each subframe may include S symbol periods, e.g., 14 symbol periods for a normal cyclic prefix (as shown in FIG. 2) or 12 symbol periods for an extended cyclic prefix (not shown in FIG. 2). The S symbol periods in each subframe may be assigned indices of 0 through S-1.

LTE utilizes orthogonal frequency division multiplexing (OFDM) on the downlink and single-carrier frequency division multiplexing (SC-FDM) on the uplink. OFDM and SC-FDM partition a frequency range into multiple (N_{FFT}) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (N_{FFT}) may be dependent on the system bandwidth. For example, N_{FFT} may be equal to 128, 256, 512, 1024 or 2048 for system bandwidth of 1.25, 2.5, 5, 10 or 20 megahertz (MHz), respectively.

The time-frequency resources available for the downlink may be partitioned into units of resource elements. Each resource element may cover one subcarrier in one symbol period and may be used to send one modulation symbol, which may be a real or complex value. On the downlink, an OFDM symbol may be transmitted in each symbol period of a subframe. An OFDM symbol may include modulation symbols for resource elements used for transmission and zero symbols with a signal value of zero for resource elements not used for transmission.

In LTE, a subframe for the downlink may include a control region followed by a data region, as shown in FIG. 2. The control region may include the first Q symbol periods of the subframe, where Q may be equal to 1, 2, 3 or 4. Q may change from subframe to subframe and may be conveyed in the first symbol period of the subframe. The control region may carry control information. The data region may include the remaining S - Q symbol periods of the subframe and may carry data and/or other information.

In LTE, an eNB may transmit a Physical Control Format Indicator Channel (PCFICH), a Physical Hybrid ARQ Indicator Channel (PHICH), and one or more instances of a Physical Downlink Control Channel (PDCCH) in the control region of a subframe. The PCFICH may convey the size of the control region (i.e., the number of symbol periods for the control region). The PHICH may carry acknowledgement (ACK) and negative acknowledgement (NACK) information for data transmission sent on the uplink with hybrid automatic repeat request (HARQ). Each instance of the PDCCH may be sent in one or more Control Channel Elements (CCEs). Each CCE may include nine resource elements. Each instance of the PDCCH may carry control information for one or more UEs, which may also be referred to as downlink control information (DCI). The DCI is a message carried by a PDCCH. It includes control information such as resource assignments for a UE or a group of UEs. The control information sent on each PDCCH may convey one or more downlink grants, one or more uplink grants, power control information, and/or other information. A downlink grant may carry control information for data transmission on the downlink. An uplink grant may carry control information for data transmission on the uplink. A grant may be sent to a specific UE or a group of UEs. A grant may also be referred to as an assignment. A UE may be configured to listen to one or more instances of the PDCCH.

An eNB may also transmit control information on a Relay PDCCH (R-PDCCH) in the data region of a subframe. The R-PDCCH is designed to support operation of relay stations. A relay station may communicate with a donor eNB on a backhaul link and may communicate with one or more UEs on an access link in order to support communication between the donor eNB and the one or more UEs. The relay station may transmit the PCFICH, PHICH and PDCCH in the control region of a subframe to its UE(s) and may be unable to receive the PDCCH from the donor eNB in the control region. The donor eNB may then send control information on the R-PDCCH in the data region to the relay station. Some resources in the data region may be reserved for the R-PDCCH. The R-PDCCH resources may be negotiated between eNBs via the backhaul and may observe less interference than other resources in the data region. The R-PDCCH may also be used in scenarios in which an eNB observes high interference in the control region, e.g., in scenarios with macro eNBs and relay stations, or with macro and pico eNBs, etc. In any case, an eNB may send signaling to convey the configuration of the R-PDCCH to relay stations and/or UEs. The relay stations and/or UEs may then receive the R-PDCCH based on the signaling.

The PDCCH and R-PDCCH are separate control channels that can be independently configured and operated. Furthermore, control information is conventionally sent on only the PDCCH or only the R-PDCCH.

As shown in FIG. 2, the amount of resources available to send the PDCCH (or PDCCH resources) may be limited due to the PDCCH being constrained to the control region, which occupies only the first Q symbol periods of a subframe. The limited amount of PDCCH resources may constitute a bottleneck in scheduling UEs for data transmission on the downlink and uplink. This may be the case, for example, when many UEs have delay-sensitive bursty traffic (e.g., for Voice-over-Internet Protocol (VoIP) calls) in a large cell. In this case, a large amount of control information may need to be sent to a large number of UEs in a given subframe. The limited amount of PDCCH resources in the control region may be insufficient to send the large amount of control information to the large number of UEs.

More PDCCH resources may be required to send control information to UEs located near the coverage edge of a large cell. These cell-edge UEs may be located far away from the serving eNB and may observe poor channel conditions. For example, UE 120x in FIG. 1 may be located far away from its serving eNB 110a and may have low geometry (e.g., of -10 dB or less) for eNB 110a. The cell-edge UEs may need their control information to be sent with lower code rates and on more PDCCH resources with higher aggregation levels so that the control information can be reliably received by these UEs. However, high aggregation levels are inherently inefficient if many UEs are scheduled for data transmission. An aggregation level is the number of CCEs occupied by a given control message sent on the PDDCH.

An eNB may not be able to transmit control information on fewer PDCCH resources with higher transmit power since the maximum transmit power of the eNB is typically limited by regulatory requirements. The eNB may thus have insufficient transmit power to reliably send control information to all scheduled UEs on the PDCCH resources in the control region of a subframe, especially if there are many scheduled UEs and/or some scheduled UEs are located far away. The limited amount of PDCCH resources and the limited transmit power of the eNB may thus limit the amount of control information that can be sent to the UEs, which may adversely impact network capacity.

In an aspect, control information may be sent on both the PDCCH and R-PDCCH in order to improve reliability and/or increase the amount of control information that can be sent. Sending control information on both the PDCCH and R-PDCCH may be especially applicable for disadvantaged UEs that may be located far away from their serving eNBs and/or may observe poor channel conditions for whatever reason. For example, control information may be sent to a UE on both the PDCCH and R-PDCCH in 14 symbol periods of a subframe instead of on only the PDCCH in 3 symbol periods of the control region. The UE may then be able to receive the control information sent on both the PDCCH and R-PDCCH with a higher signal-to-noise ratio (SNR), which may be approximately 14/3 or 6.7 dB higher, assuming the same number of subcarriers is used for the PDCCH and R-PDCCH.

Control information may be sent on both the PDCCH and R-PDCCH in various manners. Several exemplary designs of sending control information on both the PDCCH and R-PDCCH are described below.

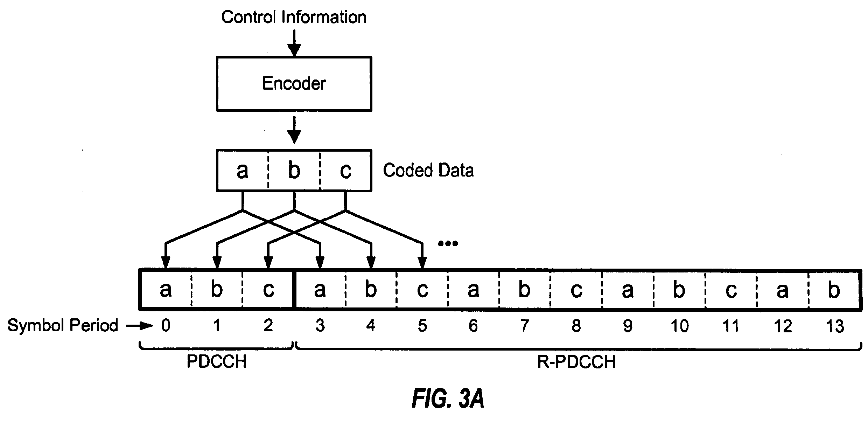

**FIG. 3A** shows a design of sending control information on both the PDCCH and R-PDCCH with repetition coding. The control information may be processed (e.g., encoded) based on a coding scheme normally used for the PDCCH to generate coded data. If the PDCCH is sent in three symbol periods of the control region, then the coded data may be partitioned into three parts a, b and c. The three parts may be sent on the PDCCH in three symbol periods of the control region, as is normally done for the PDCCH. The three parts may also be sent on the R-PDCCH in 11 symbol periods of the data region for the normal cyclic prefix, as shown in FIG. 3A. In general, the coded data may be repeated as many times as needed to fill the resources for the R-PDCCH.

In one design, a UE may obtain received symbols for the PDCCH in the control region and may decode the received symbols to recover the control information. If the UE decodes the control information correctly, then the UE may skip reception of the R-PDCCH in the data region. Conversely, if the UE decodes the control information in error, then the UE may obtain received symbols for the R-PDCCH. The UE may then decode the received symbols for both the PDCCH and R-PDCCH to recover the control information.

In one design, to decode both the PDCCH and R-PDCCH with repetition coding, the UE may combine the received symbols for the PDCCH with the received symbols for the R-PDCCH to obtain combined symbols. For example, UE may combine the received symbols corresponding to part a in symbol periods 3, 6, 9 and 12 for the R-PDCCH with the received symbols corresponding to part a in symbol period 0 for the PDCCH to obtain combined symbols for part a. The UE may compute decoding metrics for the combined symbols for all parts and may then decode the decoding metrics to recover the control information. The decoding metrics may comprise log-likelihood ratios (LLRs) or some other metrics. The UE may also decode both the PDCCH and R-PDCCH in other manners for repetition coding.

The repetition coding design shown in FIG. 3A may have certain advantages. First, the control information may be processed in the same manner regardless of whether the control information is sent on only the PDCCH or on both the PDCCH and R-PDCCH. This may reduce processing overhead for both an eNB to send and a UE to receive control information on the PDCCH and R-PDCCH. This may also allow the UE to decode only the PDCCH, or only the R-PDCCH, or both the PDCCH and R-PDCCH to recover the control information.

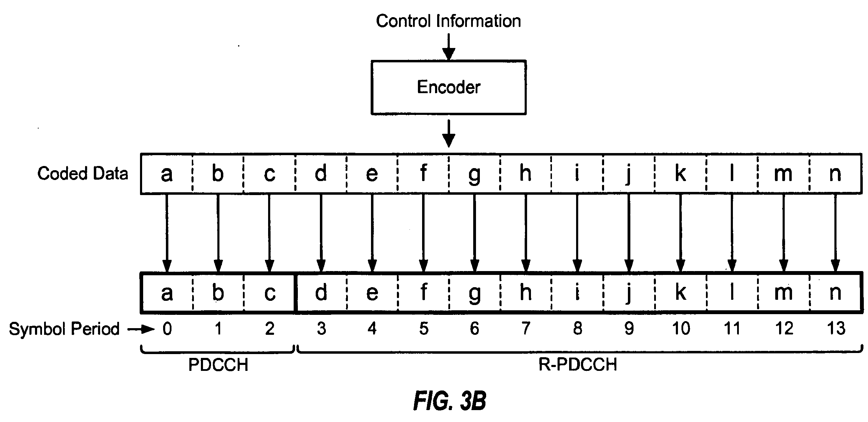

**FIG. 3B** shows a design of sending control information on both the PDCCH and R-PDCCH with joint coding. The control information may be processed (e.g., encoded) based on a coding scheme with a sufficiently low code rate to generate coded data for both the PDCCH and R-PDCCH. If the PDCCH is sent in three symbol periods of the control region and the R-PDCCH is sent in 11 symbol periods of the data region for the normal cyclic prefix, then the coded data may be partitioned into 14 parts a through n. Three parts a, b and c may be sent on the PDCCH in three symbol periods of the control region. The remaining 11 parts d through n may be sent on the R-PDCCH in the 11 symbol periods of the data region, as shown in FIG. 3B.

A UE may obtain received symbols for the PDCCH as well as received symbols for the R-PDCCH. The UE may decode the received symbols for both the PDCCH and R-PDCCH to recover the control information. In one design, to decode both the PDCCH and R-PDCCH with joint coding, the UE may compute decoding metrics for the received symbols for the PDCCH, compute decoding metrics for the received symbols for the R-PDCCH, and decode the decoding metrics for both the PDCCH and R-PDCCH to recover the control information. The UE may also decode both the PDCCH and R-PDCCH in other manners for joint coding.

The joint coding design shown in FIG. 3B may have certain advantages. For example, joint coding may provide better coding gain over repetition coding. The better coding gain may improve decoding performance.

An eNB may send control information on the PDCCH in 1, 2, 4 or 8 CCEs, which correspond to an aggregation level of 1, 2, 4 or 8, respectively. Different aggregation levels may be used for different levels of protection or reliability for the control information. The eNB may send control information to a given UE in only certain CCEs, which may be located in a common search space and a UE-specific search space for the UE. A search space may comprise a set of CCE locations where a UE may find its PDCCHs. The common search space may be applicable to all UEs whereas the UE-specific search space may be specific to the UE. In Long Term Evolution (LTE) Release-8, each user equipment (UE) may monitor both a common search space and a UE-specific search space in a control region. The UE may have a number of PDCCH candidates in the common search space and the UE-specific search space. Each PDCCH candidate may correspond to a specific set of CCEs on which control information can be sent to the UE. For each PDCCH candidate, the UE may perform a blind decode for each DCI size supported by the UE. The DCI size determines the number of bits of control information to send on the PDCCH, which in turn affects the code rate. The total number of blind decodes performed by the UE may then be dependent on the number of PDCCH candidates and the number of DCI sizes supported by the UE. For example, the UE may have (i) 6, 6, 2 and 2 PDCCH candidates for aggregation levels of 1, 2, 4 and 8, respectively, in the UE-specific search space and (ii) 4 and 2 PDCCH candidates for aggregation levels of 4 and 8, respectively, in the common search space. The UE may thus have a total of 22 PDCCH candidates for both search spaces. The UE may then perform a total of 44 blind decodes for 22 PDCCH candidates for two DCI sizes.

In one design, a UE may be configured with a PDCCH region and a R-PDCCH region in which control information may be sent to the UE. The PDCCH region may include K locations in which the PDCCH can be sent to the UE, where K may be any value. For example, the K PDCCH locations may correspond to the 22 PDCCH candidates in the common and UE-specific search spaces for the UE. The R-PDCCH region may include M locations in which the R-PDCCH can be sent to the UE, where M may be any value.

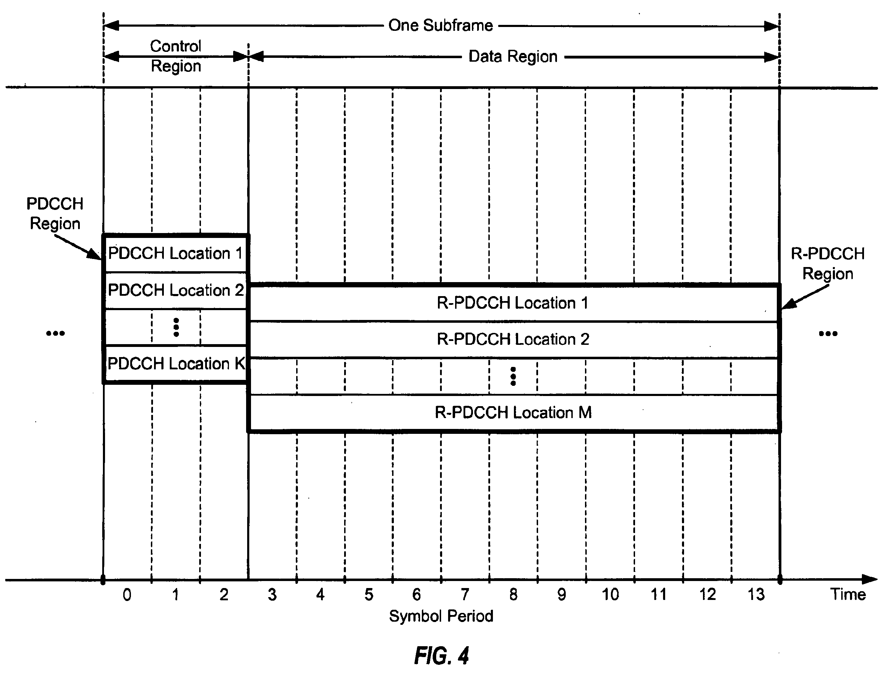

**FIG. 4** shows an exemplary configuration of the PDCCH and R-PDCCH. A PDCCH region in the control region may include K locations in which the PDCCH can be sent. The K PDCCH locations may occupy non-overlapping resources (as shown in FIG. 4) and/or overlapping resources (not shown in FIG. 4) in the control region. The PDCCH locations may be adjacent to one another (as shown in FIG. 4) or distributed throughout the control region (not shown in FIG. 4). The PDCCH may be sent at any one of the K PDCCH locations.

Similarly, a R-PDCCH region in the data region may include M locations in which the R-PDCCH can be sent. The M R-PDCCH locations may occupy non-overlapping and/or overlapping resources in the data region. The R-PDCCH locations may be adjacent to one another (as shown in FIG. 4) or distributed throughout the data region (not shown in FIG. 4). The R-PDCCH may be sent at any one of the M R-PDCCH locations.

In general, a PDCCH region may include any number of PDCCH locations, and a R-PDCCH region may include any number of R-PDCCH locations. The K PDCCH locations may have the same size or different sizes. The M R-PDCCH locations may also have the same size or different sizes, which may or may not match the size(s) of the PDCCH locations.

A number of combinations of the PDCCH and R-PDCCH may be defined. Each combination may include a specific PDCCH location and a specific R-PDCCH location. In one design, each PDCCH location may be paired with any R-PDCCH location, and a total of K × M possible combinations may be defined based on the K PDCCH locations in the PDCCH region and the M R-PDCCH locations in the R-PDCCH region. In another design, fewer than K × M combinations may be defined by restricting the pairing of PDCCH locations to R-PDCCH locations. In any case, control information may be sent on both the PDCCH and R-PDCCH by sending the control information at a specific PDCCH location and a specific R-PDCCH location corresponding to one combination of the PDCCH and R-PDCCH.

UEs may be configured in various manners to monitor only the PDCCH, or only the R-PDCCH, or both the PDCCH and R-PDCCH for control information. In one design, a UE may be explicitly or implicitly configured to monitor the PDCCH. The UE may also be configured to monitor the R-PDCCH, e.g., via separate signaling. The UE may also be configured to monitor both the PDCCH and R-PDCCH, which may be referred to as a joint assignment of the PDCCH and R-PDCCH.

In one design, a control bit or flag may be broadcast on a Physical Broadcast Channel (PBCH) and used to configure UEs for monitoring of control information. The control bit may be set to a first value (e.g., '1') to indicate that designated UEs should monitor different possible combinations of the PDCCH and R-PDCCH for control information. The designated UEs may be UEs capable of receiving control information sent on both the PDCCH and R-PDCCH, or UEs observing poor channel conditions, or some other UEs. Each designated UE may perform blind decoding for a set of combinations of the PDCCH and R-PDCCH to monitor for control information when the control bit is set to the first value. The control bit may be set to a second value (e.g., '0') to indicate that the designated UEs should monitor only the PDCCH and/or only the R-PDCCH (i.e., only the PDCCH, or only the R-PDCCH, or the PDCCH and R-PDCCH separately) for control information. In this case, each designated UE may decode only the PDCCH and/or only the R-PDCCH to monitor for control information when the control bit is set to the second value.

In another design, signaling may be sent to individual UEs to configure each UE to monitor the PDCCH and/or R-PDCCH for control information. The signaling may be upper layer signaling (e.g., Radio Resource Control (RRC) signaling) or signaling in other layers of a protocol stack. The signaling may configure a given UE to monitor only the PDCCH, or only the R-PDCCH, or both the PDCCH and R-PDCCH. The UE may then monitor the PDCCH and/or R-PDCCH in accordance with its configuration, as indicated by the signaling. This design may allow monitoring to be configured on a per-UE basis. Some UEs (e.g., cell edge UEs) may be configured to monitor both the PDCCH and R-PDCCH while other UEs may be configured to monitor only the PDCCH and/or only the R-PDCCH.

For both designs described above, control information may be sent in a number of possible combinations of the PDCCH and R-PDCCH. In a first design, no mapping exists between the PDCCH and R-PDCCH, and control information may be sent in K × M possible combinations of the PDCCH and R-PDCCH, which may include the combination of PDCCH location k and R-PDCCH location m, for k = 1, ..., K and m = 1, ..., M. In this design, control information for a given UE may be sent at any of the K PDCCH locations in the PDCCH region and also at any of the M R-PDCCH locations in the R-PDCCH region. The UE may perform blind decoding for all K × M possible combinations of the PDCCH and R-PDCCH since the control information can be sent on any combination.

In a second design, the K PDCCH locations may be mapped to the M R-PDCCH locations based on a predetermined mapping in order to reduce the number of possible combinations of the PDCCH and R-PDCCH for blind decoding. In a first mapping scheme, each PDCCH location may be mapped to at most one R-PDCCH location. For example, PDCCH region i may be mapped to R-PDCCH region i, for i = 1, ..., P, where P may be the smaller of K and M. Control information for a given UE may be sent at PDCCH location i in the control region and also at R-PDCCH location i in the data region. For this mapping scheme, the UE may perform blind decoding for only P possible combinations of the PDCCH and R-PDCCH that can be used to send control information to the UE. In a second mapping scheme, each PDCCH location may be mapped to L R-PDCCH locations, where L may be smaller than M. For example, PDCCH location k may be mapped to R-PDCCH locations (k mod M) through ((k + L-1) mod M), where "mod" denotes a modulo operation. Control information for a given UE may be sent at PDCCH location k in the control region and also at one of L possible R-PDCCH locations in the data region. For the second mapping scheme, the UE may perform blind decoding for K × L possible combinations of the PDCCH and R-PDCCH that can be used to send control information to the UE.

In general, progressively more restrictive mapping between the PDCCH and R-PDCCH may result in progressively fewer possible combinations of the PDCCH and R-PDCCH to decode, and hence progressively smaller search space for the UEs. In one design, the search space for the PDCCH and R-PDCCH may be the same for all UEs. In another design, different search spaces may be configured for different UEs.

In another aspect, control information may be sent on the R-PDCCH in multiple subframes with bundling to improve reliability. Sending control information on the R-PDCCH with bundling may be especially applicable for disadvantaged UEs. For example, control information may be sent to a UE on the R-PDCCH in 11 symbol periods of N subframes instead of on the PDCCH in 3 symbol periods of one subframe. The UE may receive the control information with an SNR that may be approximately (11 × N)/3 times higher, or 8.6 dB higher for a case with N = 2.

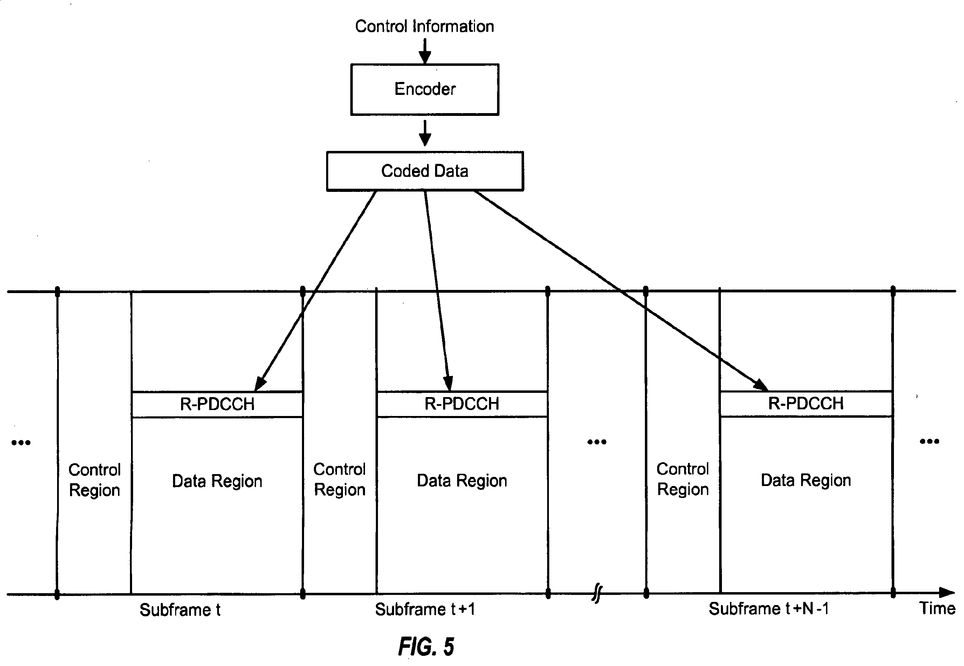

FIG. 5 shows a design of sending control information on the R-PDCCH with bundling. The control information may be processed (e.g., encoded) based on a coding scheme to generate coded data. The coded data may be sent on the R-PDCCH in N subframes, where N is greater than one. The N subframes may be consecutive subframes (as shown in FIG. 5) or non-consecutive subframes (not shown in FIG. 5). In one design, repetition coding may be used, and the same coded data may be sent on the R-PDCCH in each of the N subframes. In another design, joint coding may be used, and the coded data may be partitioned into N parts. A different part of the coded data may be sent on the R-PDCCH in each subframe.

A UE may decode the R-PDCCH with bundling in various manners. In one design, the UE may perform decoding after receiving each transmission of the R-PDCCH. The UE may obtain received symbols for the R-PDCCH in the first subframe and may decode the received symbols to recover the control information. If the UE decodes the control information correctly, then the UE may skip the remaining transmissions of the R-PDCCH. Conversely, if the UE decodes the control information in error, then the UE may obtain received symbols for the R-PDCCH in the next subframe and may decode the received symbols from both subframes to recover the control information. The UE may repeat the process until the control information is decoded correctly or all N transmissions of the R-PDCCH has been received and decoded. In another design, the UE may perform decoding after receiving all N transmissions of the R-PDCCH, or a certain minimum number of transmissions of the R-PDCCH, etc.

UEs may be configured to receive the R-PDCCH with bundling in various manners. In one design, signaling (e.g., RRC signaling) may be sent to UEs to configure the UEs to receive the R-PDCCH with bundling. For example, the signaling may convey the time and/or frequency location of the R-PDCCH used to send control information, the number of subframes in which control information is sent with bundling (i.e., the bundle size), etc. In one design, control information may be sent on the R-PDCCH with bundling using resources already reserved for the R-PDCCH (e.g., via backhaul negotiation). Hence, no additional backhaul negotiation may be needed to support bundling for the R-PDCCH. In another design, resources may be reserved for the R-PDCCH with bundling, e.g., whenever bundling is enabled.

Bundling may be used for the R-PDCCH, as described above and shown in FIG. 5. Bundling may also be used for the PDCCH, or both the PDCCH and R-PDCCH, or some other control channel, or a combination thereof.

The description above assumes that the PDCCH is sent in all symbol periods of the control region and that the R-PDCCH is sent in all symbol periods of the data region. In general, the PDCCH and R-PDCCH may each be sent in any number of symbol periods and on any number of subcarriers. The resources used for the PDCCH and/or the resources used for the R-PDCCH may be conveyed or made known to the UEs so that they can receive the control information sent on the PDCCH and/or R-PDCCH.

The techniques described herein may be used to send control information on the PDCCH and/or R-PDCCH, as described above. In another design, a Relay PHICH (R-PHICH) may be sent in the data region, e.g., in similar manner as the R-PDCCH. ACK/NACK information may be sent on only the PHICH, or only the R-PHICH, or both the PHICH and R-PHICH, e.g., as described above for sending control information on only the PDCCH, or only the R-PDCCH, or both the PDCCH and R-PDCCH. In yet another design, a Relay PCFICH (R-PCFICH) may be sent in the data region, e.g., in similar manner as the R-PDCCH. Information for the control region size may be sent on only the PCFICH, or only the R-PCFICH, or both the PCFICH and R-PCFICH. The techniques described herein may also be used for other control channels.

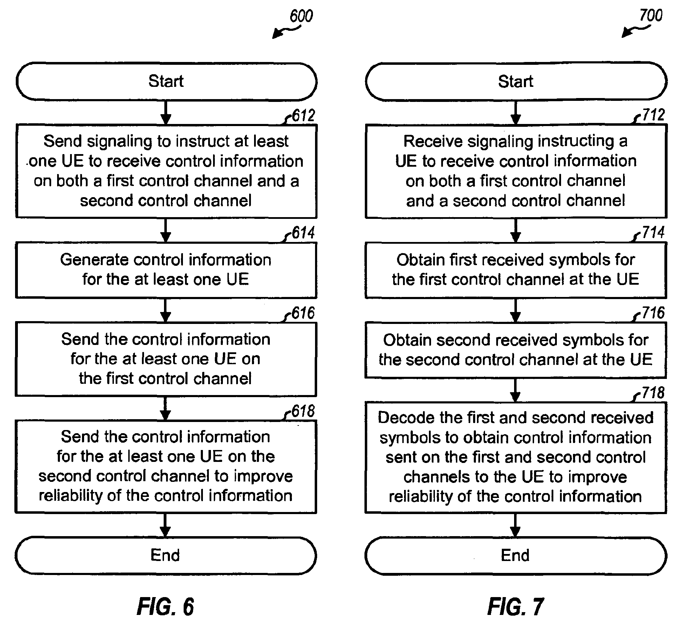

**FIG. 6** shows a design of a process 600 for sending control information. Process 600 may be performed by a base station/eNB (as described below) or by some other entity (e.g., a relay station). The base station may send signaling to instruct at least one UE to receive control information on both a first control channel (e.g., the PDCCH) and a second control channel (e.g., the R-PDCCH) (block 612). The signaling may comprise upper layer signaling (e.g., RRC signaling) sent to each UE, or broadcast signaling (e.g., a control bit) sent to all UEs or a group of UEs, and/or some other signaling.

The base station may generate control information for the at least one UE (block 614). The control information may comprise at least one downlink grant and/or at least one uplink grant for the at least one UE. The control information may also comprise other types of information such as ACK/NACK information, power control information, etc. The base station may send the control information for the at least one UE on the first control channel (block 616). The base station may also send the control information for the at least one UE on the second control channel to improve reliability of the control information (block 618).

The first and second control channels may be independently configured and operated. The first and second control channels may correspond to the PDCCH and R-PDCCH, or the PHICH and R-PHICH, or the PCFICH and R-PCFICH, or some other combination of control channels. In one design, the first control channel may be sent in a first region of a subframe, and the second control channel may be sent in a second region of the subframe that is different from the first region. The first and second regions may be located in different time intervals (as shown in FIG. 2) and/or in different frequency ranges and may occupy different resources. The first and second regions may correspond to the control and data regions in the subframe, or the PDCCH and R-PDCCH regions applicable for the at least one UE, etc. The first and second control channels may have the same size or different sizes.

In one design, for repetition coding, the base station may process the control information to obtain coded data. The base station may then send the coded data on the first control channel and also on the second control channel. In another design, for joint coding, the base station may process the control information to obtain coded data and may partition the coded data into a first part and a second part. The base station may send the first part on the first control channel and may send the second part on the second control channel.

The base station may be able to send control information to a given UE on only the first control channel, or only the second control channel, or both the first and second control channels. The base station may decide to send the control information to the at least one UE on both the first and second control channels based on configuration of the at least one UE. The base station may send other control information for at least one other UE on only the first control channel or only the second control channel.

**FIG. 7** shows a design of a process 700 for receiving control information. Process 700 may be performed by a UE (as described below) or by some other entity (e.g., a relay station). The UE may receive signaling instructing the UE to receive control information on both a first control channel (e.g., the PDCCH) and a second control channel (e.g., the R-PDCCH) (block 712). The UE may obtain first received symbols for the first control channel (block 714) and may also obtain second received symbols for the second control channel (block 716). The UE may decode the first and second received symbols to obtain control information sent on the first and second control channels to the UE to improve reliability of the control information (block 718). In one design, the first control channel may be sent in a first region of a subframe. The second control channel may be sent in a second region of the subframe that is different from the first region.

In one design, the control information may be sent with repetition coding on the first and second control channels. In this case, the UE may decode the first and second received symbols based on a decoder that is used to decode received symbols for control information sent on only the first control channel. The UE may combine the first and second received symbols to obtain combined symbols, compute decoding metrics (e.g., LLRs) based on the combined symbols, and decode the decoding metrics to recover the control information.

In another design, the control information may be sent with joint coding on the first and second control channels, and different coded data may be sent on the first and second control channels. In this case, the UE may decode the first and second received symbols based on a decoder that is different from the decoder used to decode received symbols for control information sent on only the first control channel. The UE may compute first decoding metrics based on the first received symbols, compute second decoding metrics based on the second received symbols, and decode the first and second decoding metrics to recover the control information

In one design, the UE may perform blind decoding for a plurality of possible combinations of the first and second control channels. Each possible combination may correspond to a specific location of the first control channel and a specific location of the second control channel. In one design, the plurality of possible combinations may include all K × M possible combinations, where K is the number of possible locations for the first control channel, and M is the number of possible locations for the second control channel. In another design, the plurality of possible combinations may include a subset of all possible combinations of the first and second control channels. The subset may be determined based on a predetermined mapping between the first control channel and the second control channel, as described above.

The UE may also receive signaling instructing the UE to receive control information on only the first control channel or only the second control channel. In this case, the UE may obtain and decode received symbols for only the first control channel or only the second control channel in response to the signaling.

In one design, the UE may obtain a downlink grant and/or an uplink grant from the control information. The UE may receive a data transmission on the downlink based on the downlink grant and/or send a data transmission on the uplink based on the uplink grant. The control information may also comprise other types of information such as ACK/NACK information, power control information, etc.

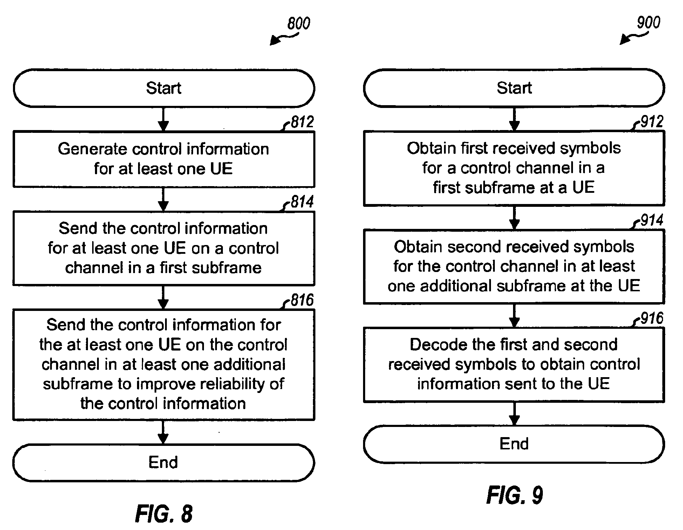

**FIG. 8** shows a design of a process 800 for sending control information with bundling. Process 800 may be performed by a base station/eNB (as described below) or by some other entity (e.g., a relay station). The base station may generate control information for at least one UE (block 812). The control information may comprise at least one downlink grant and/or at least one uplink grant for the at least one UE. The control information may also comprise other types of information.

The base station may send the control information for at least one UE on a control channel in a first subframe (block 814). The base station may also send the same control information for the at least one UE on the control channel in at least one additional subframe to improve reliability of the control information (block 816).

In one design, for repetition coding, the base station may process the control information to obtain coded data. The base station may send the coded data on the control channel in the first subframe and also in the at least one additional subframe. In another design, for joint coding, the base station may process the control information to obtain coded data and may partition the coded data into a plurality of parts. The base station may send a different part of the coded data on the control channel in each subframe.

Control information may be sent on the control channel in one subframe without bundling or in multiple subframes with bundling. The base station may send signaling to instruct the at least one UE to receive control information on the control channel in multiple subframes with bundling.

**FIG. 9** shows a design of a process 900 for receiving control information sent with bundling. Process 900 may be performed by a UE (as described below) or by some other entity (e.g., a relay station). The UE may obtain first received symbols for a control channel in a first subframe (block 912). The UE may also obtain second received symbols for the control channel in at least one additional subframe (block 914). The UE may decode the first and second received symbols to obtain control information sent to the UE (block 916). The control information may be sent on the control channel in the first subframe and the at least one additional subframe to improve reliability of the control information.

The UE may receive signaling instructing the UE to receive control information on the control channel with bundling. The UE may receive control information on the control channel (i) in a single subframe if signaling for bundling is not received or (ii) in multiple subframes if signaling for bundling is received.

In one design, the UE may obtain a downlink grant and/or an uplink grant from the control information. The UE may receive a data transmission on the downlink based on the downlink grant and/or send a data transmission on the uplink based on the uplink grant. The control information may also comprise other types of information.

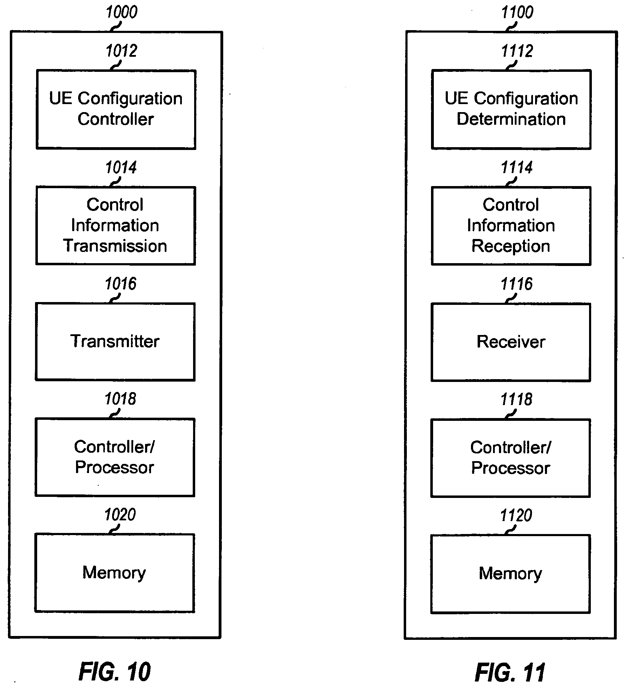

**FIG. 10** shows a design of an apparatus 1000 for sending control information. Apparatus 1000 may be part of a base station, or a relay station, or some other entity. Within apparatus 1000, a module 1012 may configure UEs for receiving control information. In one design, module 1012 may configure at least one UE to receive control information on both a first control channel (e.g., the PDCCH) and a second control channel (e.g., the R-PDCCH) and may generate (broadcast and/or unicast) signaling to instruct the at least one UE to receive control information on both the first and second control channels. In another design, module 1012 may configure the at least one UE to receive control information on a control channel (e.g., the R-PDCCH) in multiple subframes with bundling. Module 1012 may also configure the at least one UE to receive control information in other manners.

A module 1014 may generate and send control information to UEs. In one design, module 1014 may generate and send control information for the at least one UE on the first and second control channels to improve reliability. In another design, module 1014 may generate and send control information for the at least one UE on a control channel in multiple subframes to improve reliability. Module 1014 may also send control information to the at least one UE in other manners.

A transmitter 1016 may transmit the signaling and control information to the UEs. A controller/processor 1018 may direct the operation of various modules within apparatus 1000. A memory 1020 may store data and program codes for apparatus 1000.

FIG. 11 shows a design of an apparatus 1100 for receiving control information. Apparatus 1100 may be part of a UE (as described below), or a relay station, or some other entity. Within apparatus 1100, a module 1112 may receive (broadcast and/or unicast) signaling configuring the UE for receiving control information. In one design, the signaling may instruct the UE to receive control information on both a first control channel (e.g., the PDCCH) and a second control channel (e.g., the R-PDCCH) to improve reliability. In another design, the signaling may instruct the UE to receive control information on a control channel (e.g., the R-PDCCH) in multiple subframes to improve reliability. The signaling may also instruct the UE to receive control information in other manners.

A module 1114 may receive control information in accordance with the configuration of the UE. In one design, module 1114 may obtain first received symbols for the first control channel, obtain second received symbols for the second control channel, and decode the first and second received symbols to obtain control information sent to the UE. In another design, module 1114 may obtain received symbols for a control channel in multiple subframes and decode the received symbols to obtain control information sent to the UE. Module 1014 may also receive control information for the UE in other manners.

A receiver 1116 may receive and process downlink signals and provide received symbols for all control channels of interest. A controller/processor 1118 may direct the operation of various modules within apparatus 1100. A memory 1120 may store data and program codes for apparatus 1100.

The modules in FIGS. 10 and 11 may comprise processors, electronic devices, hardware devices, electronic components, logical circuits, memories, software codes, firmware codes, etc., or any combination thereof.

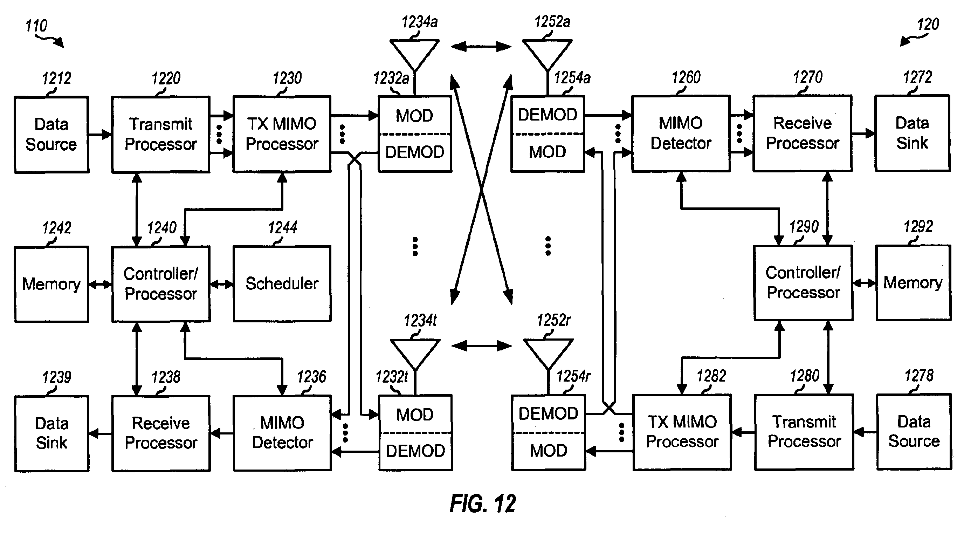

**FIG. 12** shows a block diagram of a design of an eNB/base station 110 and a UE 120, which may be one of the eNBs and one of the UEs in FIG. 1. eNB 110 may be equipped with T antennas 1234a through 1234t, and UE 120 may be equipped with R antennas 1252a through 1252r, where in general T ≥ 1 and R ≥ 1.

At eNB 110, a transmit processor 1220 may receive data from a data source 1212 for one or more UEs, process (e.g., encode and modulate) the data for each UE based on one or more modulation and coding schemes selected for that UE, and provide data symbols for all UE. Transmit processor 1220 may also process control information (e.g., for the PDCCH, R-PDCCH, PHICH, R-PHICH, PCFICH, R-PCFICH, PBCH, etc.) and provide control symbols. Transmit processor 1220 may also generate reference symbols for reference signals. A transmit multiple-input multiple-output (TX MIMO) processor 1230 may precode the data symbols, the control symbols, and/or the reference symbols (if applicable) and may provide T output symbol streams to T modulators (MOD) 1232a through 1232t. Each modulator 1232 may process its output symbol stream (e.g., for OFDM, etc.) to obtain an output sample stream. Each modulator 1232 may further condition (e.g., convert to analog, filter, amplify, and upconvert) its output sample stream and generate a downlink signal. T downlink signals from modulators 1232a through 1232t may be transmitted via T antennas 1234a through 1234t, respectively.

At UE 120, R antennas 1252a through 1252r may receive the downlink signals from eNB 110 and other eNBs, and each antenna 1252 may provide a received signal to an associated demodulator (DEMOD) 1254. Each demodulator 1254 may condition (e.g., filter, amplify, downconvert, and digitize) its received signal to obtain samples and may further process the samples (e.g., for OFDM, etc.) to obtain received symbols. A MIMO detector 1260 may perform MIMO detection on the received symbols (if applicable) and provide detected symbols. A receive processor 1270 may process (e.g., demodulate and decode) the detected symbols to obtain decoded data and control information for UE 120. Processor 1270 may provide the decoded data to a data sink 1272 and provide the decoded control information to a controller/processor 1290.

On the uplink, data from a data source 1278 and feedback information from controller/processor 1290 may be processed (e.g., encoded and modulated) by a transmit processor 1280, spatially processed by a TX MIMO processor 1282 (if applicable), and further processed by modulators 1254a through 1254r to generate R uplink signals, which may be transmitted via antennas 1252a through 1252r. At eNB 110, the uplink signals from UE 120 and other UEs may be received by antennas 1234a through 1234t, processed by demodulators 1232a through 1232t, detected by a MIMO detector 1236 (if applicable), and further processed (e.g., demodulated and decoded) by a receive processor 1238 to recover the data and feedback information sent by UE 120. Processor 1238 may provide the recovered data to a data sink 1239 and the recovered feedback information to controller/processor 1240. Controller/processor 1240 may control data transmission to/from UE 120 based on the feedback information from UE 120.

Controllers/processors 1240 and 1290 may direct the operation at eNB 110 and UE 120, respectively. Processor 1240 and/or other processors and modules at eNB 110 may perform or direct process 600 in FIG. 6, process 800 in FIG. 8, and/or other processes for the techniques described herein. Processor 1290 and/or other processors and modules at UE 120 may perform or direct process 700 in FIG. 7, process 900 in FIG. 9, and/or other processes for the techniques described herein. Memories 1242 and 1292 may store data and program codes for eNB 110 and UE 120, respectively. A scheduler 1244 may schedule UE 120 and/or other UEs for data transmission on the downlink and/or uplink based on the feedback information received from all UEs.

The processors and modules at eNB 110 in FIG. 12 may implement the modules in FIG. 10. For example, processor 1240 in FIG. 12 may implement module 1012 and processor 1018 in FIG. 10, and processor 1220 may implement module 1014. The processors and modules at UE 120 in FIG. 12 may implement the modules in FIG. 11. For example, processor 1290 in FIG. 12 may implement module 1112 and processor 1118 in FIG. 11, and processor 1270 may implement module 1114.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with the appended claims.

## Claims

1. A method (800) for wireless communication, comprising:
sending (814) control information for at least one user equipment, UE, on a second region of a first subframe of a plurality of subframes, wherein each subframe has a first region corresponding to a Physical Downlink Control Channel, PDCCH, and has said second region corresponding to a Relay Physical Downlink Control Channel, R-PDCCH sent in a data region of said subframe; and
sending (816) the control information for the at least one UE on said second region of at least one additional subframe of said plurality of subframes to improve reliability of the control information.

2. The method (800) of claim 1, further comprising:
processing the control information to obtain coded data; and
sending the coded data on the second region of the first subframe and also on the second region of the at least one additional subframe.

3. The method (800) of claim 1, further comprising:
processing the control information to obtain coded data;
partitioning the coded data into a plurality of parts; and
sending a different part of the coded data on the second region in each subframe.

4. The method (800) of claim 1, further comprising:
sending signaling to instruct the at least one UE to receive control information on the second region in multiple subframes.

5. The method (800) of claim 1, further comprising: generating the control information comprising at least one downlink grant, or at least one uplink grant, or both downlink and uplink grants for the at least one UE.

6. An apparatus (1000) for wireless communication, comprising:
means for sending (1014) control information for at least one user equipment, UE, on a second region of a first subframe of a plurality of subframes, wherein each subframe has a first region corresponding to a Physical Downlink Control Channel, PDCCH, and has said second region corresponding to a Relay Physical Downlink Control Channel, R-PDCCH sent in a data region of said subframe; and
means for sending (1014) the control information for the at least one UE on said second region of at least one additional subframe of said plurality of subframes to improve reliability of the control information.

7. A method (900) for wireless communication, comprising:
obtaining (912) first received symbols for a control channel in a second region of a first subframe of a plurality of subframes, wherein each subframe has a first region corresponding to a Physical Downlink Control Channel, PDCCH, and has said second region corresponding to a Relay Physical Downlink Control Channel, R-PDCCH sent in a data region of said subframe at a user equipment, UE;
obtaining (914) second received symbols for the control channel in said second region of at least one additional subframe of said plurality of subframes at the UE; and
decoding (916) the first and second received symbols to obtain control information sent to the UE, the control information being sent on the second region in the first subframe and the at least one additional subframe to improve reliability of the control information.

8. The method (900) of claim 7, further comprising: receiving signaling instructing the UE to receive control information on the second region in multiple subframes, wherein the first received symbols and the second received symbols are obtained in the first subframe and the at least one additional subframe and decoded in response to the signaling.

9. The method (900) of claim 7, further comprising: obtaining a grant for the UE from the control information; and sending or receiving a data transmission based on the grant.

10. An apparatus (1100) for wireless communication, comprising:
means for obtaining (1114) first received symbols in a second region of a first subframe of a plurality of subframes, wherein each subframe has a first region corresponding to a Physical Downlink Control Channel, PDCCH, and has said second region corresponding to a Relay Physical Downlink Control Channel, R-PDCCH sent in a data region of said subframe at a user equipment (UE);
means for obtaining (1114) second received symbols in said second region of at least one additional subframe of said plurality of subframes at the UE; and
means for decoding the first and second received symbols to obtain control information sent to the UE, the control information being sent on the second region in the first subframe and the at least one additional subframe to improve reliability of the control information.

11. A computer program product, comprising:
a computer-readable medium comprising:
code for causing at least one computer to carry out the steps of any of claims 1 to 5 or 7 to 9.

## Patentansprüche

1. Ein Verfahren (800) zur Drahtloskommunikation, das Folgendes aufweist:
Senden (814) von Steuerinformation für wenigstens eine Nutzereinrichtung bzw. UE (UE = user equipment) auf einem zweiten Bereich eines ersten Subrahmens einer Vielzahl von Subrahmen, wobei jeder Subrahmen einen ersten Bereich hat, der einem physikalischen Abwärtsverbindungssteuerkanal bzw. PDCCH (PDCCH = Physical Downlink Control Channel) entspricht, und einen zweiten Bereich hat, der einem physikalischen Weiterleitungs-Abwärtsverbindungskanal bzw. R-PDCCH (R-PDCCH = Relay Physical Downlink Control Channel) entspricht, und zwar gesendet in einem Datenbereich des Subrahmens; und
Senden (816) der Steuerinformation für die wenigstens eine UE auf dem zweiten Bereich von wenigstens einem zusätzlichen Subrahmen der Vielzahl von Subrahmen, um eine Zuverlässigkeit der Steuerinformation zu verbessern.

2. Verfahren (800) nach Anspruch 1, das weiter Folgendes aufweist:
Verarbeiten der Steuerinformation um codierte Daten zu erlangen; und
Senden der codierten Daten auf dem zweiten Bereich des ersten Subrahmens und auch auf dem zweiten Bereich des wenigstens einen zusätzlichen Subrahmens.

3. Verfahren (800) nach Anspruch 1, das weiter Folgendes aufweist:
Verarbeiten der Steuerinformation, um codierte Daten zu erlangen;
Partitionieren der codierten Daten in eine Vielzahl von Teilen; und
Senden eines unterschiedlichen Teils der codierten Daten auf dem zweiten Bereich in jedem Subrahmen.

4. Verfahren (800) nach Anspruch 1, das weiter Folgendes aufweist:
Senden von Signalisierung, um die wenigstens eine UE anzuweisen, Steuerinformation auf dem zweiten Bereich in mehreren Subrahmen zu empfangen.

5. Verfahren (800) nach Anspruch 1, das weiter Folgendes aufweist: Generieren der Steuerinformation, die wenigstens eine Abwärtsverbindungszuteilung oder wenigstens eine Aufwärtsverbindungszuteilung oder sowohl Abwärtsals auch Aufwärtsverbindungszuteilungen für die wenigstens eine UE aufweist.

6. Eine Vorrichtung (1000) zur Drahtloskommunikation, die Folgendes aufweist:
Mittel zum Senden (1014) von Steuerinformation für wenigstens eine Nutzereinrichtung bzw. UE (UE = user equipment) auf einem zweiten Bereich eines ersten Subrahmens einer Vielzahl von Subrahmen, wobei jeder Subrahmen einen ersten Bereich hat, der einem physikalischen Abwärtsverbindungssteuerkanal bzw. PDCCH (PDCCH = Physical Downlink Control Channel) entspricht, und einen zweiten Bereich hat, der einem physikalischen Weiterleitungs-Abwärtsverbindungskanal bzw. R-PDCCH (R-PDCCH = Relay Physical Downlink Control Channel) entspricht, und zwar gesendet in einem Datenbereich des Subrahmens; und
Mittel zum Senden (1014) der Steuerinformation für die wenigstens eine UE auf dem zweiten Bereich von wenigstens einem zusätzlichen Subrahmen der Vielzahl von Subrahmen, um eine Zuverlässigkeit der Steuerinformation zu verbessern.

7. Verfahren (900) zur Drahtloskommunikation, das Folgendes aufweist:
Erlangen (912) erster empfangener Symbole für einen Steuerkanal in einem zweiten Bereich eines ersten Subrahmens einer Vielzahl von Subrahmen, wobei jeder Subrahmen einen ersten Bereich hat, der einem physikalischen Abwärtsverbindungssteuerkanal bzw. PDCCH (PDCCH = Physical Downlink Control Channel) entspricht, und einen zweiten Bereich hat, der einem physikalischen Weiterleitungs-Abwärtsverbindungskanal bzw. R-PDCCH (R-PDCCH = Relay Physical Downlink Control Channel) entspricht, und zwar gesendet in einem Datenbereich des Subrahmens an einer Nutzereinrichtung bzw. UE (UE = user equipment); und
Erlangen (914) von zweiten empfangenen Symbolen für den Steuerkanal in dem zweiten Bereich des wenigstens einen zusätzlichen Subrahmens der Vielzahl von Subrahmen an der UE; und
Decodieren (916) der ersten und zweiten empfangenen Symbole zum Erlangen von Steuerinformation, die an die UE gesendet wird, wobei die Steuerinformation auf dem zweiten Bereich in dem ersten Subrahmen und dem wenigstens einen zusätzlichen Subrahmen gesendet wird, um die Zuverlässigkeit der Steuerinformation zu verbessern.

8. Verfahren (900) nach Anspruch 7, das weiter Folgendes aufweist: Empfangen von Signalisierung, die die UE anweist, Steuerinformation auf dem zweiten Bereich in mehreren Subrahmen zu empfangen, wobei die ersten empfangenen Symbole und die zweiten empfangenen Symbole in dem ersten Subrahmen und dem wenigstens einen zusätzlichen Subrahmen erhalten und ansprechend auf die Signalisierung decodiert werden.

9. Verfahren (900) nach Anspruch 7, das weiter Folgendes aufweist: Erlangen einer Zuteilung für die UE aus der Steuerinformation; und Senden oder Empfangen einer Datensendung basierend auf der Zuteilung.

10. Eine Vorrichtung (1100) zur Drahtloskommunikation, die Folgendes aufweist:
Mittel zum Erlangen (1114) erster empfangener Symbole in einem zweiten Bereich eines ersten Subrahmens einer Vielzahl von Subrahmen, wobei jeder Subrahmen einen ersten Bereich hat, der einem physikalischen Abwärtsverbindungssteuerkanal bzw. PDCCH (PDCCH = Physical Downlink Control Channel) entspricht, und einen zweiten Bereich hat, der einem physikalischen Weiterleitungs-Abwärtsverbindungskanal bzw. R-PDCCH (R-PDCCH = Relay Physical Downlink Control Channel) entspricht, und zwar gesendet in einem Datenbereich des Subrahmens an einer Nutzereinrichtung bzw. UE (UE = user equipment); und
Mittel zum Erlangen (1114) von zweiten empfangenen Symbolen in dem zweiten Bereich des wenigstens einen zusätzlichen Subrahmens der Vielzahl von Subrahmen an der UE; und
Mittel zum Decodieren der ersten und zweiten empfangenen Symbole zum Erlangen von Steuerinformation, die an die UE gesendet wird, wobei die Steuerinformation auf dem zweiten Bereich in dem ersten Subrahmen und
dem wenigstens einen zusätzlichen Subrahmen gesendet wird, um die Zuverlässigkeit der Steuerinformation zu verbessern.

11. Ein Computerprogrammprodukt, das Folgendes aufweist:
ein computerlesbares Medium, das Folgendes aufweist:
Code, um wenigstens einen Computer zu veranlassen, die Schritte nach einem der Ansprüche 1 bis 5 oder 7 bis 9 auszuführen.

## Revendications

1. Procédé (800) de communication sans fil, comprenant :
envoyer (814) des informations de commande pour au moins un équipement d'utilisateur, UE, dans une seconde région d'une première sous-trame d'une pluralité de sous-trames, dans lequel chaque sous-trame comprend une première région correspondant à un canal physique de commande de communication descendante, PDCCH, et au moins une seconde région correspondant à un canal physique relais de communication descendante, R-PDCCH, envoyée dans une région de données de la sous-trame ; et
envoyer (816) les informations de commande pour ledit au moins un UE dans la seconde région d'au moins une sous-trame supplémentaire de la pluralité de sous-trames pour améliorer la fiabilité des informations de commande.

2. Procédé (800) selon la revendication 1, comprenant en outre :
traiter les informations de commande pour obtenir des données codées ; et
envoyer les données codées dans la seconde région de la première sous-trame et également dans la seconde région de ladite au moins une sous-trame supplémentaire.

3. Procédé (800) selon la revendication 1, comprenant en outre :
traiter les informations de commande pour obtenir des données codées ;
partitionner les données codées en une pluralité d'éléments ; et
envoyer un élément différent des données codées dans la seconde région de chaque sous-trame.

4. Procédé (800) selon la revendication 1, comprenant en outre :
envoyer une signalisation pour donner instruction audit au moins un UE de recevoir des informations de commande dans la seconde région de sous-trames multiples.

5. Procédé (800) selon la revendication 1, comprenant en outre : produire les informations de commande comprenant au moins un accord de liaison descendante, ou au moins un accord de liaison montante, ou des accords de liaison descendante et de liaison montante pour ledit au moins un UE.

6. Dispositif (1000) de communication sans fil, comprenant :
des moyens (1014) pour envoyer des informations de commande pour au moins un équipement d'utilisateur, UE, dans une seconde région d'une première sous-trame d'une pluralité de sous-trames, dans lequel chaque sous-trame comprend une première région correspondant à un canal physique de commande de communication descendante, PDCCH, et au moins une seconde région correspondant à un canal physique relais de communication descendante, R-PDCCH, envoyée dans une région de données de la sous-trame ; et
des moyens (1014) pour envoyer les informations de commande pour ledit au moins un UE dans la seconde région d'au moins une sous-trame supplémentaire de la pluralité de sous-trames pour améliorer la fiabilité des informations de commande.

7. Procédé (900) de communication sans fil, comprenant :
obtenir (912) des premiers symboles reçus pour un canal de commande dans une seconde région d'une première sous-trame d'une pluralité de sous-trames, dans laquelle chaque sous-trame comporte une première région correspondant à un canal physique de commande de communication descendante, PDCCH, et ladite seconde région qui correspond à un canal physique relais de communication descendante, R-PDCCH, envoyée dans une région de données de la sous-trame au niveau d'un équipement d'utilisateur, UE ;
obtenir (914) des seconds symboles reçus pour le canal de commande de la seconde région d'au moins une sous-trame supplémentaire de la pluralité de sous-trames au niveau de l'UE ; et
décoder (916) les premiers et seconds symboles reçus pour obtenir des informations de commande envoyées à l'UE, les informations de commande étant envoyées dans la seconde région de la première sous-trame et ladite au moins une sous-trame supplémentaire pour améliorer la fiabilité des informations de commande.

8. Procédé (900) selon la revendication 7, comprenant en outre : recevoir une signalisation donnant instruction à l'UE de recevoir des informations de commande dans la seconde région en sous-trames multiples, dans lequel les premiers symboles reçus et les seconds symboles reçus sont obtenus dans la première sous-trame et ladite au moins une sous-trame supplémentaire et décodés en réponse à la signalisation.

9. Procédé (900) selon la revendication 7, comprenant en outre : obtenir un accord pour l'UE à partir des informations de commande et envoyer ou recevoir une transmission de données sur la base de l'accord.

10. Dispositif (1100) de communication sans fil, comprenant :
des moyens (1114) pour obtenir des premiers symboles reçus dans une seconde région d'une première sous-trame d'une pluralité de sous-trames, chaque sous-trame comportant une première région correspondant à un canal physique de commande de communication descendante, PDCCH, et ladite seconde région correspondant à un canal physique relais de communication descendante, R-PDCCH, envoyée dans une région de données de la sous-trame au niveau d'un équipement d'utilisateur, (UE) ;
des moyens (1114) pour obtenir des seconds symboles reçus pour le canal de commande de la seconde région d'au moins une sous-trame supplémentaire de la pluralité de sous-trames au niveau de l'UE ; et
des moyens pour décoder les premiers et seconds symboles reçus pour obtenir des informations de commande envoyées à l'UE, les informations de commande étant envoyées dans la seconde région de la première sous-trame et ladite au moins une sous-trame supplémentaire pour améliorer la fiabilité des informations de commande.

11. Produit programme d'ordinateur, comprenant un milieu lisible par ordinateur comprenant un code pour amener au moins un ordinateur à mettre en oeuvre les étapes selon l'une quelconque des revendications 1 à 5 ou 7 à 9.
